# EUROPÄISCHE PATENTSCHRIFT

(11) **EP 0 713 796 B1**
(45) Veröffentlichungstag und Bekanntmachung des Hinweises auf die Patenterteilung: **19.08.1998**
(21) Anmeldenummer: 95115532.4
(22) Anmeldetag: 02.10.1995
(51) Int. Cl.: B60J 7/12, B60J 10/10

(54) **Faltverdeck für Fahrzeuge**
Foldable top for vehicle
Capote pliante pour véhicule

(30) Priorität: 23.11.1994 DE 4441669
(43) Veröffentlichungstag der Anmeldung: 29.05.1996
(73) Patentinhaber: Dr.Ing.h.c. F. Porsche Aktiengesellschaft, 70435 Stuttgart (DE)
(72) Erfinder: Aydt, Matthias, D-71735 Eberdingen (DE); Pfertner, Kurt, D-71299 Wimsheim (DE); Just, Jan, D-71229 Leonberg (DE); Blech, Christof, D-71272 Renningen (DE); Beierl, Dominik, D-70825 Korntal-Münchingen (DE)

(56) Entgegenhaltungen:
- US-A- 3 090 646
- US-A- 3 486 788
- US-A- 5 033 787

## Beschreibung

Die Erfindung bezieht sich auf ein Faltverdeck für Fahrzeuge gemäß dem Oberbegriff des Patentanspruchs 1.

Aus der DE 42 10 492 C1 geht ein Faltverdeck für Fahrzeuge hervor, bei dem ein Randbereich des Verdeckbezugs um den hinteren Rand eines mehrteiligen Spannbügels herumgeführt und an dessen Unterseite unter Zwischenschaltung einer Halteschiene in Lage gehalten ist. In die Halteschiene ist ein Dichtkörper eingesetzt, der mit einem angrenzenden Karosserieteil in Wirkverbindung steht.

Aufgabe der Erfindung ist es, den Randbereich des Verdeckbezugs und einen mit dem angrenzenden Karosserieteil zusammenwirkenden Dichtkörper so am Spannbügel festzulegen, daß beim erstmaligen Zusammenbau und im Reparaturfall eine einfache Montage des Verdeckbezugs und des Dichtkörpers am Spannbügel erzielt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die getrennten Aufnahmen am Spannbügel die Montage und Demontage des Verdeckbezugs beim Erstzusammenbau und im Reparaturfall wesentlich vereinfacht wird. Der zwischen den beiden Aufnahmen in einer weiteren Aufnahme aufgenommene zweite Dichtkörper kompensiert örtlich auftretende, unterschiedlich große Spaltbereiche zwischen dem Verdeckbezug und dem Verdeckkastendeckel.

Der zweite Dichtkörper verhindert einen Abrieb am Verdeckstoff bei einer Relativbewegung von Verdeckkastendeckel und Spannbügel.

Ferner wird durch den zweiten Dichtkörper die Abdichtung bei geschlossenem Verdeck im Bereich des Spannbügels weiter optimiert.

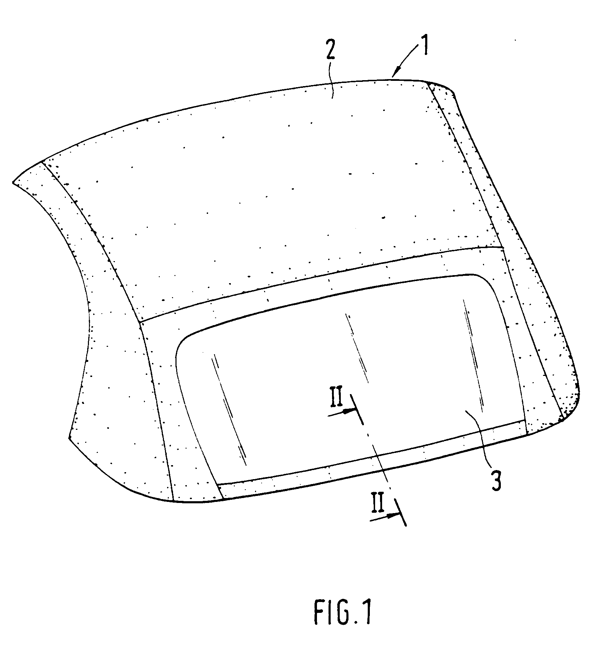

Ein Ausführungsbeispiel der Erfindung ist in der Zeichnung dargestellt und wird im folgenden näher erläutert:
Es zeigt
- Fig. 1: eine perspektivische Ansicht von hinten auf ein Faltverdeck eines Fahrzeuges,
- Fig. 2: einen Schnitt nach der Linie II-II der Fig. 1 in größerem Maßstab,
- Fig. 3: eine Einzelheit "X" der Fig. 2 in größerem Maßstab,
- Fig. 4: einen Schnitt entsprechend Fig. 2 einer weiteren Ausführungsform,
- Fig. 5: einen Schnitt entsprechend Fig. 2 einer dritten Ausführungsform,

Ein Faltverdeck 1 umfaßt ein nicht näher dargestelltes tragendes Verdeckgestell und einen an diesem befestigten, elastischen Verdeckbezug 2. Im hinteren querverlaufenden Bereich des Faltverdecks 1 ist eine Heckscheibe 3 vorgesehen, die durch eine starre oder flexible Sichtscheibe gebildet wird.

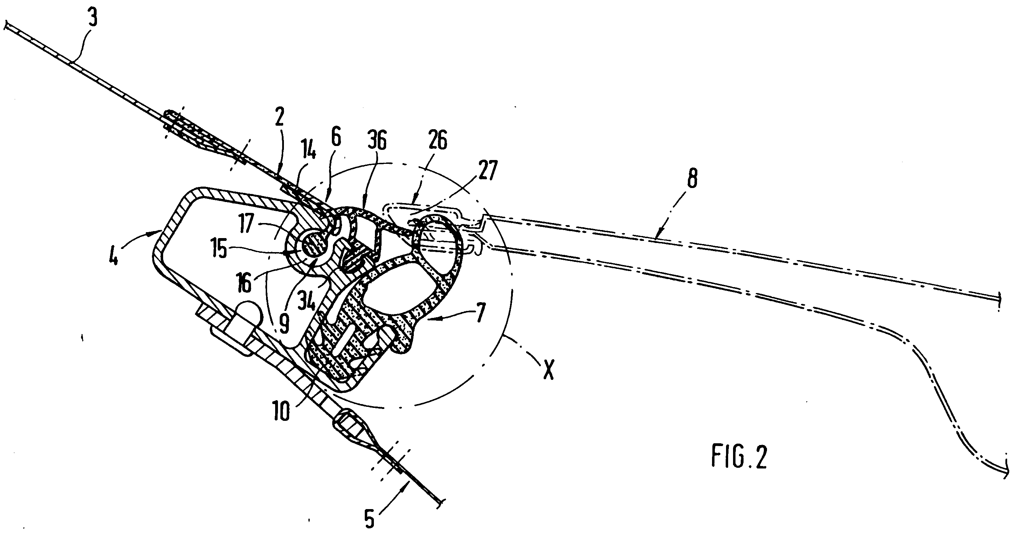

In einer straff gespannten Stellung (Fig. 2) wird der Verdeckbezug 2 unterhalb der Heckscheibe 3 an einem Spannbügel 4 befestigt, der zumindest abschnittsweise durch ein gebogenes Strangpreßprofil aus einer Leichtmetallegierung gebildet wird.

Der von oben gesehen eine etwa U-förmige Gesamterstreckung aufweisende Spannbügel 4 bildet den unteren Abschluß des Faltverdecks 1 und ist in nicht näher dargestellter Weise an seinen beiden vorderen Enden an einem angrenzenden Hauptspriegel des Verdeckgestells drehbar angelenkt. Im hinteren, querverlaufenden Bereich ist der Spannbügel 4 örtlich über zwei beabstandete Haltegurte 5 am angrenzenden Aufbau festgelegt.

Gemäß Fig. 2 ist am heckseitigen Spannbügel 4 ein Randbereich 6 des Verdeckbezugs 2 befestigt. Ferner ist am Spannbügel 4 ein Dichtkörper 7 in Lage gehalten, der mit einem angrenzenden Karosserieteil in Wirkverbindung steht. Im Ausführungsbeispiel wird das Karosserieteil durch einen Verdeckkastendeckel 8 gebildet.

Erfindungsgemäß sind am Spannbügel 4 zumindest zwei getrennte, mit Abstand zueinander angeordnete Aufnahmen 9, 10 zur Festlegung des hinteren Randbereiches 6 des Verdeckbezugs 2 und zur Halterung des Dichtkörpers 7 vorgesehen.

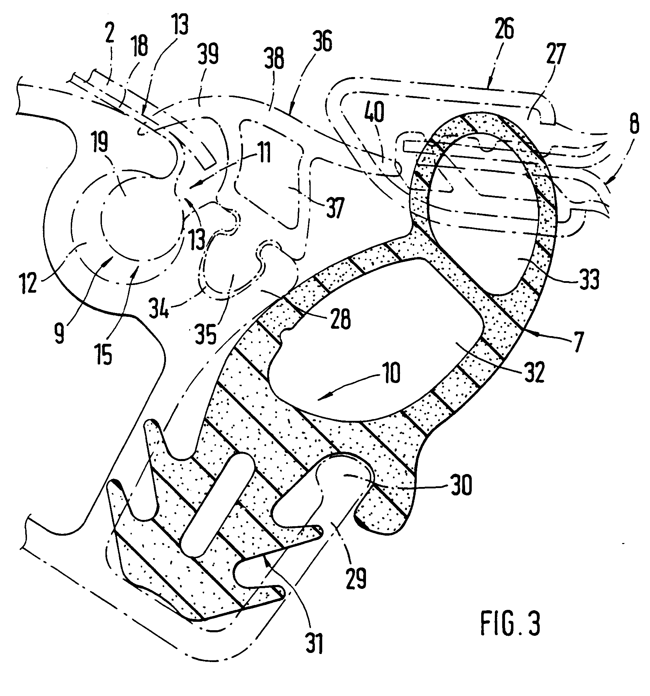

Die erste Aufnahme 9 für den Verdeckbezug 2 wird durch eine mit einer schmalen Einführöffnung 11 versehene, hinterschnittene Längsnut 12 gebildet, in die ein randseitiger Halteabschnitt 13 des Verdeckbezugs 2 eingesetzt ist (Fig. 3).

Die Längsnut ist gemäß den Fig. 2 und 3 im Querschnitt annähernd kreisförmig ausgebildet. Die Einführöffnung 11 ist an der Oberseite des Spannbügels 4 vorgesehen.

Der Halteabschnitt 13 wird durch einen an der Innenseite des Verdeckbezugs 2 befestigten Anzugsstreifen 14 gebildet, der im Bereich der Längsnut 12 zumindest ein mit der Längsnut 12 formschlüssig zusammenwirkendes Haltelement 15 aufweist.

In Fig. 2 wird das Haltelement 15 durch einen ösenartigen Bereich 16 gebildet, in den ein Einlageteil 17 eingelegt ist.

Gemäß Fig. 3 wird der Halteabschnitt 13 durch einen innenseitig an den Verdeckbezug 3 angenähten Keder 18 gebildet, der im Bereich der Längsnut 12 eine einstückig mit dem Keder 18 ausgebildete Querschnittserweiterung 19 aufweist.

Die etwa kreisförmige Querschnittserweiterung 19 weist einen kleineren Querschnitt auf als die kreisförmige Längsnut 12.

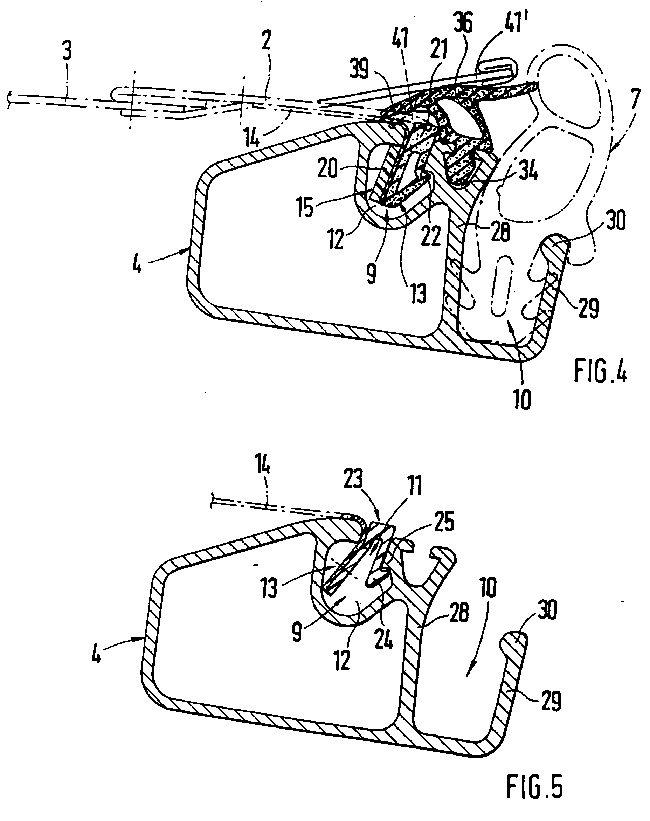

In den Fig. 4 und 5 ist die hinterschnittene Längsnut 12 nicht kreisförmig ausgebildet, sondern etwa V-förmig profiliert.

Entsprechend Fig. 4 ist das Haltelement 15 zweiteilig ausgebildet und wird durch einen mit dem Anzugsstreifen 14 verbundenen Kunststoffstreifen 20 und ein keilförmiges, elastisches Element 21 gebildet.

Der aufrechte, etwa rechteckförmige Kunststoffstreifen 20 ist mit dem freien Ende des Anzugsstreifens (14) fest verbunden (vernäht, verklebt oder dgl.) und weist eine geringfügig kleinere Höhe auf als die Längsnut 12.

Das vorzugsweise aus Gummi gefertigte Element 21 wird nach dem Einsetzen des mit dem Kunststoffstreifen 20 verbundenen Anzugsstreifens 14 in die Längsnut 12 eingesetzt und ist in dieser klemmend in Lage gehalten. Ein nasenartiger Vorsprung 22 des Elements 21 hintergreift abschnittsweise die hinterschnittene Längsnut 12. Das Element 21 ist auf der dem Kunststoffstreifen 20 abgekehrten Seite des Anzugsstreifens 14 angeordnet und weist einen innenliegenden hohlen Bereich auf.

Gemäß Fig. 5 ist der Anzugsstreifen 14 an seinem freien Ende mit einem federnden Spreizglied 23 verbunden, das verrastend in die Längsnut 12 einsetzbar ist. Ein Schnapphaken 24 des Spreizgliedes 23 hintergreift abschnittsweise eine Nase 25 der Längsnut 12. Das Spreizglied 23 ist mit dem freien Ende des Anzugsstreifens 14 vernäht oder verklebt.

Die erste Aufnahme 9 ist an der Oberseite des in der Draufsicht gesehen etwa U-förmig gebogenen Spannbügels 4 ausgebildet und dem angrenzenden Verdeckkastendeckel 8 vorgelagert.

Auf den vorderen Rand des Verdeckkastendeckels 8 ist eine Zierleiste 26 aufgesetzt, die mit einem innenliegenden Dichtprofil 27 zusammenwirkt.

Am hinteren Randbereich des Spannbügels 4 ist die zweite nach oben hin offene Aufnahme 10 vorgesehen, wobei der in die zweite Aufnahme 10 eingesetzte Dichtkörper 7 mit dem darüberliegenden Verdeckkastendeckel 8 zusammenwirkt. Die zweite Aufnahme 10 ist etwa U-förmig profiliert (Fig 3).

Ein erster, etwas längerer Schenkel 28 der zweiten Aufnahme 10 ist an seinem freien, oberen Ende zum zweiten Schenkel 29 hin abgebogen. Der zweite Schenkel 29 weist an seinem freien, nach oben gerichteten Ende eine nach innen gerichtete nasenförmige Anformung 30 auf. Der erste Dichtkörper 7 umfaßt einen in die zweite Aufnahme 10 eingesetzten Fußabschnitt 31 und zwei übereinanderliegende Hohlprofilabschnitte 32, 33, wobei sich der obere Hohlprofilabschnitt 33 an der Innenseite des Verdeckkastendeckels 8 bzw. an der aufgesteckten Zierleiste 26 abstützt.

Der erste Dichtkörper 7 ist an der dem Verdeckkastendeckel 8 zugekehrten Seite abschnittsweise mit einem Gleitlack beschichtet (nicht näher dargstellt).

Darüber hinaus ist an der Oberseite des Spannbügels 4 zwischen der ersten und zweiten Aufnahme 9,10 eine weitere hinterschnittene Aufnahme 34 ausgebildet, die einen korrespondieren Fußabschnitt 35 eines zweiten Dichtkörpers 36 aufnimmt (Fig. 3).

Der zweite Dichtkörper 36 kompensiert unterschiedlich breite Spalte zwischen dem Rand des Verdeckbezugs 2 und dem ersten Dichtkörper 7 im querverlaufenden mittleren Bereich und den beiden seitlich außenliegenden Bereichen des Spannbügels 4.

Gemäß Fig. 3 ist an den Fußabschnitt 35 ein Hohlprofilabschnitt 37 mit parallelogrammähnlichem Querschnitt angeschlossen. Vom oberen Steg 38 des Hohlprofilabschnitts 37 sind beiderseits Lippenabschnitte 39, 40 weggeführt, die sich mit ihren freien Enden am Randbereich des Verdeckbezugs 2 und dem Verdeckkastendeckel 8 bzw. dem ersten Dichtkörper 7 unter Vorspannung abstützen.

Gemäß Fig. 4 ist das dem Spannbügel 4 zugekehrte Ende 41 des Verdeckbezugs 2 entweder durch den Lippenabschnitt 39 verdeckt oder das Ende 41' überlappt zumindest abschnittsweise die Oberseite des Dichtkörpers 36.

## Patentansprüche

1. Faltverdeck (1) für Fahrzeuge mit einem Verdeckgestell und einem Verdeckbezug (2), wobei an einem heckseitigen Spannbügel (4) des Verdeckgestells ein Randbereich des Verdeckbezugs (2) befestigt ist und am Spannbügel (4) ein Dichtkörper (7) angebracht ist, der mit einem angrenzenden Karosserieteil in Wirkverbindung steht, **dadurch gekennzeichnet,** daß am Spannbügel (4) getrennte Aufnahmen (9, 10) zur Festlegung des Randbereiches des Verdeckbezugs (2) und zur Halterung des Dichtkörpers (7) vorgesehen sind.

2. Faltverdeck nach Anspruch 1, **dadurch gekennzeichnet,** daß die erste Aufnahme (9) für den Verdeckbezug (2) durch eine mit einer schmalen Einführöffnung (11) versehene hinterschnittene Längsnut (12) gebildet wird, in die ein randseitiger Halteabschnitt (13) des Verdeckbezugs (2) eingesetzt ist.

3. Faltverdeck nach Anspruch 2, **dadurch gekennzeichnet,** daß der Halteabschnitt (13) durch einen an der Innenseite des Verdeckbezugs (2) befestigten Anzugstreifen (14) gebildet wird, wobei der Anzugsstreifen (14) im Bereich der Längsnut (12) zumindest ein mit dieser zusammenwirkendes Haltelement (15) aufweist.

4. Faltverdeck nach Anspruch 3, **dadurch gekennzeichnet,** daß der Anzugsstreifen (14) an seinem freien Ende einen ösenartigen Bereich (16) mit einem eingesetzten Einlageteil (17) aufweist.

5. Faltverdeck nach Anspruch 3, **dadurch gekennzeichnet,** daß der Halteabschnitt (13) durch einen innenseitig am Verdeckbezug (2) angenähten Keder (18) gebildet wird, der im Bereich der Längsnut (12) eine Querschnittserweiterung (19) aufweist.

6. Faltverdeck nach Anspruch 3, **dadurch gekennzeichnet,** daß der Anzugsstreifen (14) an seinem freien Ende mit einem Kunststoffstreifen (20) vernäht ist und daß auf der dem Kunststoffstreifen (20) gegenüberliegenden Seite ein keilförmiges Element (21) angeordnet ist, mit dem der randseitige Halteabschnitt in der Längsnut (12) klemmend in Lage gehalten ist.

7. Faltverdeck nach Anspruch 3, **dadurch gekennzeichnet,** daß der Anzugstreifen (14) an seinem freien Ende mit einem federnden Spreizglied (23) verbunden ist, das in die Längsnut (12) verrastend einsetzbar ist.

8. Faltverdeck nach den Ansprüchen 1 bis 3, **dadurch gekennzeichnet,** daß die erste Aufnahme (9) an der Oberseite des - in der Draufsicht gesehen - U-förmig gebogenen Spannbügels (4) angeordnet ist, und zwar dem angrenzenden Verdeckkastendeckel (8) vorgelagert.

9. Faltverdeck nach Anspruch 1, **dadurch gekennzeichnet,** daß die zweite Aufnahme am (10) hinteren Randbereich des Spannbügels (4) vorgesehen und nach oben hin offen ausgebildet ist, wobei der eingesetzte erste Dichtkörper (7) mit einem darüberliegenden Verdeckkastendeckel (8) zusammenwirkt.

10. Faltverdeck nach Anspruch 9, **dadurch gekennzeichnet,** daß ein Schenkel (28) der etwa U-förmig profilierten zweiten Aufnahme (10) an seinem freien Ende in Richtung des anderen Schenkels (29) abgebogen ist und daß der andere Schenkel (29) an seinem freien nach oben gerichteten Ende eine nach innen gerichtete nasenförmige Anformung (30) aufweist.

11. Faltverdeck nach Anspruch 9, **dadurch gekennzeichnet,** daß der Dichtkörper (7) auf der dem Verdeckkastendeckel zugekehrten Seite mit Gleitlack beschichtet ist.

12. Faltverdeck nach einem oder mehreren der vorangegangenen Ansprüche, **dadurch gekennzeichnet,** daß an der Oberseite des Spannbügels (4) zwischen den beiden Aufnahmen (9, 10) eine weitere hinterschnittene Aufnahme (34) angeordnet ist, die einen korrespondierend ausgebildeten Fußabschnitt (35) eines zweiten Dichtkörpers (36) aufnimmt und daß sich im Spaltbereich zwischen dem Randbereich (6) des Verdeckbezugs (2) und dem ersten Dichtkörper (7) ein Hohlprofilabschnitt (37) erstreckt, von dem beiderseits Lippenabschnitte (39, 40) weggeführt sind, wobei die Lippenabschnitte (39, 40) mit dem Randbereich (16) des Verdeckbezugs (2) und dem Verdeckkastendeckel (8) bzw. dem ersten Dichtkörper (7) abstützend zusammenwirken.

## Claims

1. A folding top (1) for vehicles, with a folding-top frame and a folding-top cover (2), wherein an edge area of the folding-top cover (2) is secured to a clamping hoop (4) of the folding-top frame on the tail and a sealing member (7) operatively connected to an adjacent bodywork part is attached to the clamping hoop (4), **characterized in that** separate receiving means (9, 10) are provided on the clamping hoop (4) for fixing the edge area of the folding-top cover (2) and for holding the sealing member (7).

2. A folding top according to Claim 1, **characterized in that** the first receiving means (9) for the folding-top cover (2) is formed by an undercut longitudinal groove (12) which is provided with a narrow insertion opening (11) and into which a retaining portion (13) of the folding-top cover (2) on the edge is inserted.

3. A folding top according to Claim 2, **characterized in that** the retaining portion (13) is formed by a tightening strip (14) secured to the inside of the folding-top cover (2), wherein the tightening strip (14) is provided in the region of the longitudinal groove (12) with at least one retaining member (15) cooperating therewith.

4. A folding top according to Claim 3, **characterized in that** the free end of the tightening strip (14) is provided with a lug-like area (16) having an inserted inlay part (17).

5. A folding top according to Claim 3, **characterized in that** the retaining portion (13) is formed by a beading strip (18) which is sewn onto the inside of the folding-top cover (2) and which is provided with a cross-sectional enlargement (19) in the region of the longitudinal groove (12).

6. A folding top according to Claim 3, **characterized in that** the free end of the tightening strip (14) is sewn up with a plastics-material strip (20), and a wedge-shaped member (21), by which the retaining portion on the edge is held in position in a clamped manner in the longitudinal groove (12), is arranged on the side opposite the plastics-material strip (20).

7. A folding top according to Claim 3, **characterized in that** the free end of the tightening strip (14) is connected to a resilient spreading member (23) which can be inserted into the longitudinal groove (12) in the manner of a catch.

8. A folding top according to Claims 1 to 3, **characterized in that** the first receiving means (9) is arranged on the top of the clamping hoop (4) bent into a U-shape as seen in plan view - and is positioned in front of the adjacent lid (8) of the folding-top compartment.

9. A folding top according to Claim 1, **characterized in that** the second receiving means (10) is provided on the rear edge area of the clamping hoop (4) and is open towards the top, wherein the inserted first sealing member (7) cooperates with a lid (8) of the folding-top compartment situated thereabove.

10. A folding top according to Claim 9, **characterized in that** an arm (28) of the second receiving means (10) profiled substantially in a U-shape is bent at its free end in the direction of the other arm (29), and the free end of the other arm (29) directed upwards is provided with an integrally moulded nose-shaped portion (30) directed inwards.

11. A folding top according to Claim 9, **characterized in that** the sealing member (7) is coated with lubricant paint on the side facing the lid of the folding-top compartment.

12. A folding top according to one or more of the preceding Claims, **characterized in that** a further undercut receiving means (34), which receives a suitably shaped foot portion (35) of a second sealing member (36), is arranged on the top of the clamping hoop (4) between the two receiving means (9, 10), and a hollow-section portion (37), from which lip portions (39, 40) project on both sides, extends in the gap area between the edge area (6) of the folding-top cover (2) and the first sealing member (7), wherein the lip portions (39, 40) cooperate with the edge area (6) of the folding-top cover (2) and the lid (8) of the folding-top compartment or the first sealing member (7) in a supporting manner.

## Revendications

1. Capote pliante (1) pour véhicules automobiles comportant un bâti et un revêtement (2), une zone de bordure du revêtement (2) étant fixée sur un étrier de tension (4) arrière du bâti de la capote et un corps d'étanchéité (7) étant placé sur l'étrier de tension (4), lequel corps d'étanchéité est en liaison active avec un élément de carrosserie adjacent, caractérisée en ce que des logements (9, 10) séparés sont prévus sur l'étrier de tension (4) en vue de la fixation de la zone de bordure du revêtement (2) et en vue de la fixation du corps d'étanchéité (7).

2. Capote pliante selon la revendication 1, caractérisée en ce que le premier logement (9) pour le revêtement (2) est formé par une rainure longitudinale (12) détalonnée, pourvue d'une ouverture d'introduction (11) étroite, dans laquelle est insérée une portion de maintien (13) côté bordure du revêtement (2) de la capote.

3. Capote pliante selon la revendication 2, caractérisée en ce que la portion de maintien (13) est formée par une bande de traction (14), fixée sur le côté intérieur du revêtement (2) de la capote, la bande de traction (14) présentant, dans la zone de la rainure longitudinale (12), au moins un élément de maintien (15), coopérant avec celle-ci.

4. Capote pliante selon la revendication 3, caractérisée en ce que la bande de traction (14) présente à son extrémité libre, une zone (16) du type d'un millet avec un élément de garniture (17) inséré.

5. Capote pliante selon la revendication 3, caractérisée en ce que la portion de maintien (13) est formée par un bourrelet (18) cousu côté intérieur sur le revêtement (2), lequel bourrelet présente un élargissement de section transversale (19), dans la région de la rainure longitudinale (12).

6. Capote pliante selon la revendication 3, caractérisée en ce que la bande de traction (14) est cousue, à son extrémité libre, avec une bande de matière plastique (20) et en ce que sur le côté opposé à la bande de matière plastique (20, est disposé un élément (21) en forme de coin, avec lequel la portion de maintien côté bordure est immobilisée par serrage dans la rainure longitudinale (12).

7. Capote pliante selon la revendication 3, caractérisée en ce que la bande de traction (14) est reliée à son extrémité libre avec un organe d'écartement (23) formant ressort, qui peut être inséré par accrochage dans la rainure longitudinale (12).

8. Capote pliante selon les revendications 1 à 3, caractérisée en ce que le premier logement (9) est disposé sur le côté supérieur de l'étrier de tension (4) courbé en U - vu de dessus -, à savoir qu'il est placé devant le couvercle (8) adjacent du coffret de la capote.

9. Capote pliante selon la revendication 1, caractérisée en ce que le deuxième logement (10) est prévu sur la zone de bordure arrière de l'étrier de tension (4) et est ouvert vers le haut, le premier corps d'étanchéité (7) inséré à l'intérieur coopérant avec un couvercle (8) situé au-dessus du coffret de la capote.

10. Capote pliante selon la revendication 9, caractérisée en ce qu'une branche (28) du deuxième logement (10), profilé à peu près en U, est repliée à son extrémité libre, en direction de l'autre branche (29) et en ce que l'autre branche (29) présente, à son extrémité libre dirigée vers le haut, une formation (30) en ergot, dirigée vers l'intérieur.

11. Capote pliante selon la revendication 9, caractérisée en ce que le corps d'étanchéité (7) est recouvert d'une laque glissante sur le côté tourné vers le couvercle du coffret de la capote.

12. Capote pliante selon une ou plusieurs des revendications précédentes, caractérisée en ce que sur la face supérieure de l'étrier de tension (4), entre les deux logements (9, 10), est prévu un autre logement (34) détalonné, qui loge une portion de pied (35), formée en correspondance, d'un deuxième corps d'étanchéité (36) et en ce que dans la zone de fente entre la zone de bordure (6) du revêtement (2) de la capote et le premier corps d'étanchéité (7), s'étend une portion de profilé creux (37), de laquelle s'éloignent des deux côtés des portions de lèvres (39, 40), les portions de lèvres (39, 40) coopérant par soutien avec la zone de bordure (16) du revêtement (2) de la capote et avec le couvercle (8) du coffret de la capote ou avec le premier corps d'étanchéité (7).
